(19) Europäisches Patentamt / European Patent Office / Office européen des brevets

(11) **EP 2 586 886 B1**

(12) **EUROPEAN PATENT SPECIFICATION**

(45) Date of publication and mention
of the grant of the patent:
**20.03.2019 Bulletin 2019/12**

(51) Int Cl.:
*C22C 38/14* *(2006.01)*    *C22C 38/54* *(2006.01)*
*C21D 8/02* *(2006.01)*    *C21D 9/46* *(2006.01)*
*C23C 2/06* *(2006.01)*    *C23C 2/28* *(2006.01)*
*C22C 18/04* *(2006.01)*    *C22C 38/02* *(2006.01)*
*C22C 38/04* *(2006.01)*    *C22C 38/06* *(2006.01)*

(21) Application number: **11798295.9**

(22) Date of filing: **24.06.2011**

(86) International application number:
**PCT/JP2011/065134**

(87) International publication number:
**WO 2011/162418 (29.12.2011 Gazette 2011/52)**

(54) **HIGH-TENSION/HOT-ROLLED STEEL SHEET HAVING EXCELLENT WORKABILITY, AND METHOD FOR PRODUCING SAME**

HEISSGEWALZTES HOCHSPANNUNGS-STAHLBLECH VON HERVORRAGENDER VERARBEITBARKEIT SOWIE VERFAHREN ZU SEINER HERSTELLUNG

TÔLE D'ACIER LAMINÉE À CHAUD À HAUTE TENSION PRÉSENTANT UNE EXCELLENTE MALLÉABILITÉ, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.06.2011 JP 2011139036**
**25.06.2010 JP 2010145378**

(43) Date of publication of application:
**01.05.2013 Bulletin 2013/18**

(73) Proprietor: **JFE Steel Corporation**
**Tokyo, 100-0011 (JP)**

(72) Inventors:
• **ARIGA, Tamako**
**Tokyo 100-0011 (JP)**
• **NAKAJIMA, Katsumi**
**Tokyo 100-0011 (JP)**
• **FUNAKAWA, Yoshimasa**
**Tokyo 100-0011 (JP)**
• **MORIYASU, Noriaki**
**Tokyo 100-0011 (JP)**
• **MURATA, Takayuki**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 267 175    JP-A- 2002 322 539**
**JP-A- 2005 154 809    JP-A- 2005 154 809**
**JP-A- 2009 052 139    US-A1- 2004 074 573**
**US-A1- 2010 196 189**

**Description**

[Technical Field]

The present invention relates to a high-strength hot-rolled steel sheet having excellent formability (stretch flange formability) suitable as a material for transportation machinery, such as automotive parts, or a structural material, and a method for manufacturing the high-strength hot-rolled steel sheet.

[Background Art]

In order to decrease $CO_2$ emissions from the perspective of global environmental conservation, it is always important in the automobile industry to decrease the weights of automotive bodies while maintaining their strength and improve mileage. In order to decrease the weights of automotive bodies while maintaining their strength, it is effective to increase the strength of steel sheets serving as materials for automotive parts so as to decrease the thickness of the steel sheets. For example, an increase in the strength and a decrease in the thickness of steel sheets for automotive suspension parts result in a significant decrease in automobile weight and are therefore effective for improving mileage. Thus, there is a very high demand for higher-strength materials for these parts.

Most of automotive parts made of steel sheets are shaped by press forming or burring. Thus, steel sheets for automotive parts must have excellent elongation and stretch flange formability. For example, strength and formability are regarded as important in steel sheets serving as materials for suspension parts, which have complicated shapes. Thus, there is a demand for a high-strength steel sheet having excellent elongation and formability, such as stretch flange formability.

However, steel materials having higher strength generally have lower formability. Thus, in order to use high-strength hot-rolled steel sheets in suspension parts, it is necessary to develop high-strength hot-rolled steel sheets having high strength and formability. Many studies have been done, and various techniques have been proposed.

For example, Patent Literature 1 proposes a technique for improving the fatigue characteristics and stretch flange formability of a high-strength hot-rolled steel sheet having a tensile strength (TS) of more than 490 N/mm$^2$ (490 MPa). The high-strength hot-rolled steel sheet has a composition of C: 0.03% to 0.25%, Si: 2.0% or less, Mn: 2.0% or less, P: 0.1% or less, S: 0.007% or less, Al: 0.07% or less, and Cr: 1.0% or less, on a weight percent basis, and has a complex structure of ferrite and a second phase (at least one of pearlite, bainite, martensite, and retained austenite). The hardness, volume percentage, and grain size of the second phase are limited.

Patent Literature 2 proposes a technique for improving the fatigue strength, particularly stretch flange formability, of a high-strength hot-rolled steel sheet having a tensile strength (TS) of 490 MPa or more. The high-strength hot-rolled steel sheet contains chemical components of C: 0.01% to 0.10%, Si: 1.5% or less, Mn: more than 1.0% to 2.5%, P: 0.15% or less, S: 0.008% or less, Al: 0.01% to 0.08%, and one or two of Ti and Nb: 0.10% to 0.60%, on a weight percent basis, and ferrite constitutes 95% by area or more. The ferrite has an average grain size in the range of 2.0 to 10.0 $\mu$m. The high-strength hot-rolled steel sheet does not contain martensite or retained austenite. In the technique proposed by Patent Literature 2, the Mn content is more than 1.0% to 2.5% so as to improve the strength of the steel sheet and prepare fine ferrite grains.

Patent Literature 3 proposes a technique for improving the burring and fatigue characteristics of a high-strength hot-rolled steel sheet having a tensile strength (TS) of 640 MPa or more. The high-strength hot-rolled steel sheet has a composition of C: 0.01% to 0.1%, S ≤ 0.03%, N ≤ 0.005%, Ti: 0.05% to 0.5%, Si: 0.01% to 2%, Mn: 0.05% to 2%, P ≤ 0.1%, Al: 0.005% to 1.0%, and Ti satisfying Ti-48/12C-48/14N-48/32S ≥ 0%, on a mass percent basis. A precipitate containing Ti grains of 5 nm or more in steel has an average size in the range of 10$^1$ to 10$^3$ nm and minimum intervals in the range of more than 10$^1$ nm and 10$^4$ nm or less.

[Citation List]

[Patent Literature]

[PTL 1] Japanese Unexamined Patent Application Publication No. 4-329848
[PTL 2] Japanese Unexamined Patent Application Publication No. 2000-328186
[PTL 3] Japanese Unexamined Patent Application Publication No. 2002-161340 EP2267175 discloses a high-strength hot-rolled steel sheet containing, in terms of mass%, C: 0.015% or more to less than 0.040%; Si: less than 0.05%; Mn: 0.9% or more to 1.8% or less; P: less than 0.02%; S: less than 0.01%; Al: less than 0.1%; N: less than 0.006%; and Ti: 0.05% or more to less than 0.11%, with the remainder being Fe and inevitable impurities, wherein Ti/C is in a range of 2.5 or more to less than 3.5, Nb, Zr, V, Cr, Mo, B and W are not included, a microstructure includes a mixed microstructure of polygonal ferrite and quasi-polygonal ferrite in a proportion of greater than 96%, a maximum tensile strength is 520 MPa or more and less than 720 MPa.

[Summary of Invention]

[Technical Problem]

However, according to the technique proposed by Patent Literature 1, in the press forming of the steel sheet into parts having a desired shape, the interface between the soft ferrite and the hard second phase is likely to act as a starting point of cracking in the forming, resulting in unstable formability. Furthermore, according to the technique proposed by Patent Literature 1, when the tensile strength (TS) of the steel sheet is increased to approximately 590 MPa, formability, particularly stretch flange formability, cannot satisfy the present requirements (see examples in Patent Literature 1).

According to the technique proposed by Patent Literature 2, the high Mn content of the steel sheet results in the segregation of Mn in the central portion in the thickness direction, which induces cracking in the press forming of the steel sheet. Thus, it is difficult to consistently achieve excellent stretch flange formability, and it is not necessarily possible to achieve sufficient stretch flange formability. Furthermore, according to the technique proposed by Patent Literature 2, the Ti content is predetermined to form Ti carbide so as to decrease C solid solution, which adversely affects stretch flange formability. However, an excessive amount of Ti relative to C is likely to result in the coarsening of Ti carbide, making it impossible to stably achieve desired strength.

According to the technique proposed by Patent Literature 3, the precipitate in the steel sheet has large size distribution, and it is impossible to consistently achieve desired strength. Furthermore, according to the technique proposed by Patent Literature 3, the steel sheet has insufficient stretch flange formability (see examples of Patent Literature 3).

In order to stably supply materials for mass-produced automotive parts, hot-rolled steel sheets must be industrially mass-produced. According to the related art described above, it is difficult to stably supply a high-strength hot-rolled steel sheet having a tensile strength (TS) of 590 MPa or more and excellent formability (stretch flange formability). The present invention advantageously solves the problems of the related art and aims to provide a high-strength hot-rolled steel sheet that is a suitable material for automotive parts and has a tensile strength (TS) of 590 MPa or more and excellent formability (stretch flange formability), more specifically, a hole expanding ratio $\lambda$ of 100% or more, and a method for manufacturing the high-strength hot-rolled steel sheet.

Solution to Problem

In order to solve the problems described above, the present inventors have extensively studied various factors that affect the higher strength and formability (stretch flange formability) of a hot-rolled steel sheet. As a result, the present inventors obtained the following findings.

1) When the steel sheet structure is a ferrite single phase structure having a low dislocation density and excellent formability and is subjected to precipitation hardening through the dispersed precipitation of fine carbide, the hot-rolled steel sheet can have improved strength while maintaining stretch flange formability.

2) The manufacture of a hot-rolled steel sheet having excellent formability and a high tensile strength (TS) of 590 MPa or more requires the dispersed precipitation of fine carbide in a desired volume ratio. The fine carbide has an average grain size of less than 10 nm that is effective for precipitation hardening.

3) As fine carbide contributing to precipitation hardening, Ti-containing carbide is effective in terms of high strength.

4) The dispersed precipitation of Ti-containing carbide having an average grain size of less than 10 nm in a desired volume ratio requires a certain amount of Ti for forming Ti carbide, which serves as a precipitation nucleus, and at least a predetermined amount of Ti relative to the N and S contents of the steel material (Ti $\geq$ 0.04 + (N/14 x 48 + S/32 x 48)) must be contained.

5) In order to precipitate fine Ti-containing carbide (having an average grain size of less than 10 nm) in a ferrite phase, it is effective to adjust the B content and the Mn content of the steel material to a desired ratio (B $\geq$ 0.001 x Mn).

6) When the Ti content of Ti-containing carbide is higher than the C content on the basis of the atomic ratio, the carbide is likely to become coarse and adversely affects the characteristics of the hot-rolled steel sheet.

7) In order to make the Ti content of Ti-containing carbide lower than the C content on the basis of atomic ratio to prevent the coarsening of carbide, it is effective to control the Ti, N, and S contents relative to the C content in the steel material in a predetermined range (C/12 > Ti/48 - N/14 - S/32).

The present invention was completed on the basis of these findings, and the following is the gist of the present invention.

[1] A high-strength hot-rolled steel sheet having excellent formability, including:

a composition including
C: 0.005% or more and 0.050% or less, Si: 0.2% or less,
Mn: 0.8% or less,      P: 0.025% or less,
S: 0.01% or less,      N: 0.01% or less,
Al: 0.06% or less, and Ti: 0.05% or more and 0.10% or less, on a mass percent basis, such that S, N, and Ti satisfy the following formula (1), the remainder being Fe and incidental impurities; a matrix in which a ferrite phase constitutes 95% by area or more of the entire structure; and a structure in which Ti-containing fine carbide having an average grain size of less than 10 nm is dispersedly precipitated, and the volume ratio of the fine carbide to the entire structure is 0.0007 or more, wherein the high-strength hot-rolled steel sheet has a tensile strength of 590 MPa or more:

$$Ti \geq 0.04 + (N/14 \times 48 + S/32 \times 48) \qquad (1)$$

wherein S, N, and Ti denote their respective contents (% by mass).

[2] The high-strength hot-rolled steel sheet having excellent formability according to [1], further containing B: 0.0003% or more and 0.0035% or less on a mass percent basis so as to satisfy the following formula (2):

$$B \geq 0.001 \times Mn \qquad (2)$$

wherein Mn and B denote their respective contents (% by mass).

[3] The high-strength hot-rolled steel sheet having excellent formability according to [1] or [2], wherein the composition satisfies the following formula (4):

$$C/12 > Ti/48 - N/14 - S/32 \qquad (4)$$

wherein C, S, N, and Ti denote their respective contents (% by mass).

[4] The high-strength hot-rolled steel sheet having excellent formability according to any one of [1] to [3], wherein the atomic ratio of C to Ti in the fine carbide satisfies the following formula (3):

$$C/Ti > 1.0 \qquad (3)$$

wherein C/Ti denotes the atomic ratio of C to Ti in the fine carbide.

[5] The high-strength hot-rolled steel sheet having excellent formability according to any one of [1] to [4], further containing at least one of Cu, Sn, Ni, Ca, Mg, Co, As, Cr, W, Nb, Pb, and Ta, which in total constitutes 0.1% or less of the composition on a mass percent basis.

[6] The high-strength hot-rolled steel sheet having excellent formability according to any one of [1] to [5], further including a plating film on the surface thereof.

[7] A method for manufacturing a high-strength hot-rolled steel sheet having a tensile strength of 590 MPa or more and excellent formability, including:

hot rolling steel, the hot rolling involving rough rolling and finish rolling; and then cooling and coiling the steel to manufacture a hot-rolled steel sheet,
wherein the steel has a composition including
C: 0.005% or more and 0.050% or less, Si: 0.2% or less,
Mn: 0.8% or less,      P: 0.025% or less,
S: 0.01% or less,      N: 0.01% or less,
Al: 0.06% or less, and Ti: 0.05% or more and 0.10% or less, on a mass percent basis, such that S, N, and Ti satisfy the following formula (1), the remainder being Fe and incidental impurities,
the finish-rolling temperature is 880°C or more, the average cooling rate is 10°C/s or more, and the coiling temperature is 550°C or more and less than 800°C:

$$Ti \geq 0.04 + (N/14 \times 48 + S/32 \times 48) \qquad (1)$$

wherein S, N, and Ti denote their respective contents (% by mass).

[8] The method for manufacturing a high-strength hot-rolled steel sheet having excellent formability according to [7], further containing B: 0.0003% or more and 0.0035% or less on a mass percent basis so as to satisfy the following formula (2):

$$B \geq 0.001 \times Mn \qquad (2)$$

wherein Mn and B denote their respective contents (% by mass).

[9] The method for manufacturing a high-strength hot-rolled steel sheet having excellent formability according to [7] or [8], wherein the composition satisfies the following formula (4):

$$C/12 > Ti/48 - N/14 - S/32 \qquad (4)$$

wherein C, S, N, and Ti denote their respective contents (% by mass).

[10] The method for manufacturing a high-strength hot-rolled steel sheet having excellent formability according to any one of [7] to [9], further comprising at least one of Cu, Sn, Ni, Ca, Mg, Co, As, Cr, W, Nb, Pb, and Ta, which in total constitutes 0.1% or less of the composition on a mass percent basis.

[Advantageous Effects of Invention]

The present invention can provide a high-strength hot-rolled steel sheet that has a tensile strength (TS) of 590 MPa or more suitable for automotive steel sheets and excellent formability (stretch flange formability) as a material satisfactorily applicable to suspension parts having a complicated cross-sectional shape in press forming. Thus, the present invention has industrially advantageous effects.

[Description of Embodiments]

The present invention will be described in detail below.

The following are reasons for defining the structure and carbide of a steel sheet according to the present invention.

A hot-rolled steel sheet according to the present invention includes a matrix in which a ferrite phase constitutes 95% by area or more of the entire structure, and a structure in which Ti-containing fine carbide having an average grain size of less than 10 nm is dispersedly precipitated in the matrix, and the volume ratio of the fine carbide to the entire structure is 0.0007 or more.

Ferrite phase: 95% by area or more of the entire structure

In the present invention, a ferrite phase must be formed so as to improve formability (stretch flange formability) of a hot-rolled steel sheet. In order to improve the elongation and stretch flange formability of a hot-rolled steel sheet, the structure of the hot-rolled steel sheet is effectively a ferrite phase having a low dislocation density and excellent ductility. In particular, in order to improve stretch flange formability, the structure of the hot-rolled steel sheet is preferably a ferrite single phase structure. Even in the case of an incomplete ferrite single phase structure, a substantial ferrite single phase structure, more specifically, a ferrite phase constituting 95% by area or more of the entire structure has the advantages described above. Thus, the ferrite phase constitutes 95% by area or more, preferably 97% by area or more, of the entire structure.

In a hot-rolled steel sheet according to the present invention, examples of a structure other than the ferrite phase include cementite, pearlite, a bainite phase, a martensite phase, and a retained austenite phase. Such structures in total may constitute approximately 5% by area or less, preferably approximately 3% by area or less, of the entire structure.

Ti-containing fine carbide

Ti-containing carbide is highly likely to be fine carbide having a very small average grain size. Thus, in the present invention, which involves the dispersed precipitation of fine carbide in a hot-rolled steel sheet so as to increase the strength of the hot-rolled steel sheet, the fine carbide to be dispersedly precipitated is Ti-containing fine carbide. As described below, in the present invention, the atomic ratio of C to Ti in the fine carbide preferably satisfies a predetermined condition.

Average grain size of fine carbide: less than 10 nm

In order to impart desired strength (tensile strength: 590 MPa or more) to a hot-rolled steel sheet, the average grain size of fine carbide is very important. In the present invention, Ti-containing fine carbide has an average grain size of less than 10 nm. Fine carbide precipitated in a matrix acts as resistance to dislocation movement during the deformation of a hot-rolled steel sheet, thus strengthening the steel sheet. Fine carbide having an average grain size of less than 10 nm more strongly exerts this effect. Thus, Ti-containing fine carbide has an average grain size of less than 10 nm, preferably 5 nm or less.

Volume ratio of fine carbide to the entire structure: 0.0007 or more

In order to impart desired strength (tensile strength: 590 MPa or more) to a hot-rolled steel sheet, the dispersed precipitation state of Ti-containing fine carbide is also very important. In the present invention, Ti-containing fine carbide having an average grain size of less than 10 nm is dispersedly precipitated such that the volume ratio of the Ti-containing fine carbide to the entire structure is 0.0007 or more. Even when Ti-containing fine carbide has an average grain size of less than 10 nm, a volume ratio of less than 0.0007 results in difficulty in achieving the desired strength (tensile strength: 590 MPa or more) of a hot-rolled steel sheet because of a decreased amount of fine carbide. Thus, the volume ratio is 0.0007 or more. However, a volume ratio of more than 0.004 results in excessively high strength, which may result in poor stretch flange formability. Thus, the volume ratio is preferably 0.0007 or more and 0.004 or less.

In the present invention, although the main precipitation form of Ti-containing fine carbide is linear precipitation, the presence of randomly precipitated fine carbide has no effects on the characteristics. Irrespective of the precipitation form, therefore, such precipitation forms are collectively referred to as dispersed precipitation.

The following are reasons for defining the composition of a hot-rolled steel sheet according to the present invention. Unless otherwise specified, % of the components refers to % by mass.

C: 0.005% or more and 0.050% or less

C is an essential element in terms of the formation of fine carbide and strengthening of the hot-rolled steel sheet. A C content of less than 0.005% results in fine carbide not having the desired volume ratio and a tensile strength of less than 590 MPa. On the other hand, a C content of more than 0.050% results in increased strength, an increased likelihood of the formation of pearlite in the steel sheet, and increased difficulties in achieving excellent stretch flange formability. Thus, the C content is 0.005% or more and 0.050% or less, preferably 0.020% or more and 0.035% or less, more preferably 0.020% or more and 0.030% or less.

Si: 0.2% or less

Si is a solid-solution strengthening element and is effective in increasing the strength of steel. However, a Si content of more than 0.2% results in the promotion of C precipitation from a ferrite phase, an increased likelihood of precipitation of coarse Fe carbide at grain boundaries, and poor stretch flange formability. Excessive Si adversely affects platability. Thus, the Si content is 0.2% or less, preferably 0.05% or less.

Mn: 0.8% or less

Mn is a solid-solution strengthening element and is effective in increasing the strength of steel. It is therefore desirable that the Mn content be increased to strengthen the hot-rolled steel sheet. However, a Mn content of more than 0.8% results in an increased likelihood of segregation, the formation of a phase other than the ferrite phase, that is, a hard phase, and poor stretch flange formability. Thus, the Mn content is 0.8% or less, preferably 0.35% or less, more preferably 0.3% or less.

P: 0.025% or less

P is a solid-solution strengthening element and is effective in increasing the strength of steel. However, a P content of more than 0.025% results in an increased likelihood of segregation and poor stretch flange formability. Thus, the P content is 0.025% or less, preferably 0.02% or less.

S: 0.01% or less

S causes deterioration in hot workability (hot rollability), increases susceptibility to hot tearing of a slab, and exists in steel as MnS, which causes deterioration in the stretch flange formability of the hot-rolled steel sheet. Thus, in the present invention, S is preferably minimized and is 0.01% or less, preferably 0.005% or less.

N: 0.01% or less

In the present invention, N is a harmful element and is preferably minimized. In particular, an N content of more than 0.01% results in the formation of coarse nitride in steel, which causes deterioration in stretch flange formability. Thus, the N content is 0.01% or less, preferably 0.006% or less.

Al: 0.06% or less

Al acts as a deoxidizer. In order to produce such an effect, it is desirable that Al constitute 0.001% or more. However, Al constituting more than 0.06% results in poor elongation and stretch flange formability. Thus, the Al content is 0.06% or less.

Ti: 0.05% or more and 0.10% or less

Ti is the most important element in the present invention. Ti forms carbide and thereby contributes to increased strength of the steel sheet while maintaining excellent stretch flange formability. At a Ti content of less than 0.05%, it is impossible to achieve the desired strength (tensile strength of 590 MPa or more) of the hot-rolled steel sheet. On the other hand, a Ti content of more than 0.10% may result in poor stretch flange formability. Thus, the Ti content is 0.05% or more and 0.10% or less, preferably 0.065% or more and 0.095% or less.

A hot-rolled steel sheet according to the present invention contains S, N, and Ti in the range described above so as to satisfy the formula (1):

$$Ti \geq 0.04 + (N/14 \times 48 + S/32 \times 48) \qquad (1)$$

wherein S, N, and Ti denote their respective contents (% by mass).

The formula (1) is a requirement to be satisfied so that Ti-containing fine carbide has the desired precipitation state described above, and is a very important indicator in the present invention.

$$Ti \geq 0.04 + (N/14 \times 48 + S/32 \times 48) \qquad (1)$$

As described above, the present invention involves the dispersed precipitation of Ti-containing fine carbide in a hot-rolled steel sheet. Carbide in steel is dissolved by heating before hot rolling and is precipitated during the coiling process after the hot rolling. In order to stably precipitate fine carbide having an average grain size of less than 10 nm and perform dispersed precipitation such that the volume ratio of the fine carbide to the entire structure is 0.0007 or more, a sufficient amount of Ti serving as precipitation nuclei of fine carbide must be contained. In a high-temperature region, however, Ti tends to form nitride or sulfide rather than carbide. Thus, with precipitation of nitride or sulfide, an insufficient Ti content relative to the N and S contents in steel results in a decreased amount of Ti serving as precipitation nuclei of fine carbide. It is therefore difficult to precipitate Ti-containing fine carbide at the desired volume ratio (0.0007 or more).

Thus, in the present invention, the Ti, N, and S contents are controlled so as to satisfy the formula (1): $Ti \geq 0.04 + (N/14 \times 48 + S/32 \times 48)$. This ensures a sufficient amount of Ti serving as precipitation nuclei of fine carbide, allows fine carbide having an average grain size of less than 10 nm to be stably precipitated, and allows dispersed precipitation to occur such that the volume ratio of the fine carbide to the entire structure is 0.0007 or more.

In the present invention, steel is heated to an austenite region before hot rolling to dissolve carbide in the steel, and, simultaneously with subsequent austenite to ferrite transformation, Ti-containing carbide is precipitated. However, a high austenite to ferrite transformation temperature results in coarse precipitated Ti-containing carbide. Thus, in the present invention, the austenite to ferrite transformation temperature ($Ar_3$ transformation point) is preferably controlled in the coiling temperature range such that Ti-containing carbide is precipitated during the coiling process. This can prevent coarsening, resulting in the formation of carbide having an average grain size of less than 10 nm.

In order to control the austenite to ferrite transformation temperature ($Ar_3$ transformation point) in the coiling temperature, in addition to the components described above, B: 0.0003% or more and 0.0035% or less is preferably contained so as to satisfy the formula (2):

$$B \geq 0.001 \times Mn \quad (2)$$

B: 0.0003% or more and 0.0035% or less

B can reduce the $Ar_3$ transformation point of steel. In the present invention, B is added to reduce the $Ar_3$ transformation point of steel and can thereby reduce the size of Ti-containing carbide. A B content of less than 0.0003% results in an insufficiently decreased $Ar_3$ transformation point and an insufficient effect of reducing the size of Ti-containing carbide. The effect levels off at a B content of more than 0.0035%. Thus, the B content is preferably 0.0003% or more and 0.0035% or less, more preferably 0.0005% or more and 0.0020% or less.

$$B \geq 0.001 \times Mn \quad (2)$$

In the present invention, when B is contained, it is also important to appropriately control the ratio of the B content to the Mn content in steel. The present inventors studied on the dispersed precipitation of fine Ti-containing carbide (having an average grain size of less than 10 nm) in a matrix in which a ferrite phase constitutes 95% by area or more of the entire structure. As a result, the present inventors found that, in order to obtain Ti-containing carbide having an average grain size of less than 10 nm, it is effective to control the austenite to ferrite transformation temperature ($Ar_3$ transformation point) in the hot rolling process in a coiling temperature range described below.

As a result of further investigation, the present inventors show that the $Ar_3$ transformation point of steel can be controlled in a desired range by controlling a steel composition according to the present invention so as to satisfy a desired relationship between the B content and the Mn content of the steel. B of less than ($0.001 \times Mn$) results in a high $Ar_3$ transformation point of steel and an insufficiently reduced size of Ti-containing carbide. Thus, in the presence of B, $B \geq 0.001 \times Mn$.

In the present invention, when the percentage of the solid-solution strengthening element Mn is more than 0.35%, the desired strength (tensile strength: 590 MPa or more) of a steel sheet can be achieved without the effect of B. However, when the Mn content is 0.35% or less, it may be difficult to achieve the desired strength of a steel sheet without the effect of B. Thus, when the Mn content is 0.35% or less, B is preferably contained so as to reduce the size of Ti-containing carbide.

In the present invention, the C, S, N, and Ti contents are preferably controlled in the range described above so as to satisfy the formula (4):

$$C/12 > Ti/48 - N/14 - S/32 \quad (4)$$

wherein C, S, N, and Ti denote their respective contents (% by mass).

As described above, Ti-containing carbide is highly likely to be fine carbide having a very small average grain size. However, when Ti to be bound to C is greater than or equal to C on the basis of the atomic ratio, carbide is likely to become coarse. With the coarsening of carbide, precipitation hardening due to carbide decreases, and it becomes difficult to achieve the desired strength (tensile strength: 590 MPa or more) of the hot-rolled steel sheet.

Thus, in the present invention, the C, Ti, N, and S contents preferably satisfy the formula (4). More specifically, in the present invention, with respect to C and Ti in steel, the atomic % of C ($C/12$) is preferably higher than the atomic % of Ti involved in the formation of carbide ($Ti/48 - N/14 - S/32$). This can prevent the coarsening of Ti-containing fine carbide.

In the present invention, instead of the C, Ti, N, and S contents satisfying the formula (4), the atomic ratio of C to Ti in Ti-containing fine carbide may satisfy the formula (3) :

$$C/Ti > 1.0 \quad (3)$$

wherein C/Ti denotes the atomic ratio of C to Ti in the fine carbide.

The plausible reason for the coarsening of carbide when Ti in carbide is greater than or equal to C is that the coarsening of carbide depends on the diffusion of Ti, which is slow in diffusion.

A steel sheet according to the present invention may contain at least one of Cu, Sn, Ni, Ca, Mg, Co, As, Cr, W, Nb, Pb, and Ta, which in total constitutes 0.1% or less, preferably 0.03% or less. The remainder components are Fe and incidental impurities.

A steel sheet according to the present invention may have a plating film on the surface thereof. The plating film on the surface of the steel sheet improves the corrosion resistance of the hot-rolled steel sheet. Thus, the hot-rolled steel sheet is suitable as a material for parts to be exposed to severe corrosive environment, for example, automotive suspension parts. Examples of the plating film include galvanizing films and galvannealing films.

A method for manufacturing a hot-rolled steel sheet according to the present invention will be described below.

The present invention involves hot rolling steel, the hot rolling including rough rolling and finish rolling, and then cooling and coiling the steel to manufacture a hot-rolled steel sheet. The finish-rolling temperature is 880°C or more, the average cooling rate is 10°C/s or more, and the coiling temperature is 550°C or more and less than 800°C.

In the present invention, a method for melting steel is not particularly limited and may be a known melting method using a converter, an electric furnace, or the like. After the melting process, in consideration of segregation and another problem, a slab (steel) is preferably produced by a continuous casting process. A slab may also be produced by a known casting process, such as an ingot making and blooming process or a thin slab continuous casting process. When the slab is hot-rolled after casting, the slab may be reheated in a furnace before rolling or, if the slab has a predetermined temperature or more, may be directly hot-rolled without heating the slab.

The steel thus produced is subjected to rough rolling and finish rolling. In the present invention, carbide in the steel must be dissolved before rough rolling. In the present invention, which includes a carbide-forming element Ti, the heating temperature of the steel is preferably 1150°C or more. An excessively high heating temperature of the steel results in excessive oxidation of the surface and the formation of $TiO_2$, which consumes Ti. This often results in lower hardness in the vicinity of the surface of the resulting steel sheet. Thus, the heating temperature is preferably 1300°C or less. As described above, when the steel before rough rolling has a predetermined temperature or more and when carbide in the steel is dissolved, the steel is not necessarily heated before rough rolling. The rough rolling conditions are not particularly limited.

Finish-rolling temperature: 880°C or more

Optimization of the finish-rolling temperature is important in improving the elongation and stretch flange formability of a hot-rolled steel sheet and reducing the rolling load of finish rolling. A finish-rolling temperature of less than 880°C results in the coarsening of crystal grains in the surface layer of the hot-rolled steel sheet and deterioration in stretch flange formability. Furthermore, since rolling is performed in a non-recrystallization temperature range, coarse Ti carbide is precipitated at prior austenite grain boundaries, resulting in poor stretch flange formability. Thus, the finish-rolling temperature is 880°C or more, preferably 900°C or more. An excessively high finish-rolling temperature results in the coarsening of crystal grains, which adversely affects the desired strength (tensile strength: 590 MPa or more) of the steel sheet. Thus, the finish-rolling temperature is desirably 1000°C or less.

Average cooling rate: 10°C/s or more

After finish rolling, when the average cooling rate from 880°C or more to the coiling temperature is less than 10°C/s, this results in a high $Ar_3$ transformation point and an insufficiently reduced size of Ti-containing carbide. Thus, the average cooling rate is 10°C/s or more, preferably 30°C/s or more.

Coiling temperature: 550°C or more and less than 800°C

Optimization of the coiling temperature is very important in achieving the desired structure of the hot-rolled steel sheet throughout the entire width direction of the hot-rolled steel sheet, more specifically, a matrix in which a ferrite phase constitutes 95% by area or more of the entire structure, and a structure in which Ti-containing fine carbide having an average grain size of less than 10 nm is dispersedly precipitated, and the volume ratio of the fine carbide to the entire structure is 0.0007 or more.

A coiling temperature of less than 550°C results in insufficient precipitation of fine carbide in an end of rolled steel in the width direction, which is likely to be in a supercooled state, making it difficult to achieve the desired strength (tensile strength: 590 MPa or more) of the steel sheet. This also causes a problem that running stability on a runout table is difficult to achieve. On the other hand, a coiling temperature of 800°C or more results in the formation of pearlite, making it difficult to provide a matrix in which a ferrite phase constitutes 95% by area or more of the entire structure. Thus, the coiling temperature is 550°C or more and less than 800°C, preferably 550°C or more and less than 700°C, more preferably 580°C or more and less than 700°C.

Thus, in order to manufacture a high-strength hot-rolled steel sheet that has a tensile strength (TS) of 590 MPa or more and excellent formability (stretch flange formability) as a material applicable to suspension parts having a complicated cross-sectional shape, it is necessary to dispersedly precipitate fine carbide having an average grain size of less than 10 nm at a desired volume ratio (0.0007 or more) throughout the entire width direction of the steel sheet.

In the present invention, the composition is controlled so as to allow sufficient dispersed precipitation of fine carbide having an average grain size of less than 10 nm by containing at least a predetermined amount of Ti relative to the N and S contents of a steel material for a hot-rolled steel sheet (Ti $\geq$ 0.04 + (N/14 x 48 + S/32 x 48)) or further containing B and Mn such that the B and Mn contents of the steel material for the hot-rolled steel sheet satisfy the predetermined relationship (B $\geq$ 0.001 x Mn). Thus, without defining strict manufacturing conditions for a hot-rolled steel sheet, the present invention allows the dispersed precipitation of fine carbide having an average grain size of less than 10 nm at the desired volume ratio (0.0007 or more) throughout the entire width direction, thus providing uniform and excellent characteristics (tensile strength and stretch flange formability) throughout the entire width direction of the hot-rolled steel sheet.

In the present invention, the hot-rolled steel sheet thus manufactured may be plated to form a plating film on the surface of the steel sheet. For example, the hot-rolled steel sheet may be subjected to hot-dip galvanizing to form a galvanizing film or further subjected to alloying to form a galvannealing film on the surface of the steel sheet.

EXAMPLES

(EXAMPLE 1)

Molten steel having a composition listed in Table 1 was continuously casted into a slab (steel) having a thickness of 250 mm by a known method. The slab was heated to 1250°C and was then subjected to rough rolling and finish rolling at a finish-rolling temperature listed in Table 2. After the finish rolling, the rolled sheet was cooled from 880°C to the coiling temperature at an average cooling rate listed in Table 2 and was coiled at a coiling temperature listed in Table 2, thus yielding a hot-rolled steel sheet having a thickness of 2.3 mm. A hot-rolled steel sheet (steel No. A, hot-rolling No. 2) was immersed in a galvanizing bath (0.1% Al-Zn) at 480°C. After 45 g/m$^2$ of a galvanizing film was formed, the hot-rolled steel sheet was subjected to alloying at 520°C to yield a galvannealed steel sheet.

[Table 1]

| Steel No. | Composition (mass %) | | | | | | | | | Formula (1) | Formula (2) | Note |
|---|---|---|---|---|---|---|---|---|---|---|---|---|
| | C | Si | Mn | P | S | N | Al | Ti | B | | | |
| A | 0.025 | 0.03 | 0.31 | 0.011 | 0.0030 | 0.0050 | 0.041 | 0.076 | 0.0020 | 0.062 | 0.00031 | Working example |
| B | 0.023 | 0.01 | 0.28 | 0.010 | 0.0028 | 0.0043 | 0.043 | 0.064 | 0.0015 | 0.059 | 0.00028 | Working example |
| C | 0.024 | 0.02 | 0.29 | 0.012 | 0.0016 | 0.0050 | 0.044 | 0.072 | 0.0007 | 0.060 | 0.00029 | Working example |
| D | 0.002 | 0.01 | 0.20 | 0.010 | 0.0008 | 0.0030 | 0.042 | 0.041 | 0.0002 | 0.051 | 0.00020 | Comparative example |
| E | 0.031 | 0.02 | 0.81 | 0.011 | 0.0027 | 0.0046 | 0.041 | 0.073 | 0.0003 | 0.060 | 0.00081 | Comparative example |
| F | 0.035 | 0.02 | 0.28 | 0.011 | 0.0024 | 0.0033 | 0.052 | 0.082 | 0.0005 | 0.057 | 0.00028 | Working example |
| G | 0.028 | 0.03 | 0.29 | 0.012 | 0.0036 | 0.0049 | 0.049 | 0.051 | 0.0006 | 0.062 | 0.00029 | Comparative example |

Formula (1): $0.04 + (N/14 \times 48 + S/32 \times 48)$
Formula (2): $0.001 \times Mn$ (mass %)

[Table 2]

| Steel No. | Hot-rolling No. | Manufacturing conditions for hot-rolled steel sheet | | | Note |
|---|---|---|---|---|---|
| | | Finish-rolling temperature (°C) | Average cooling temperature (°C/s) | Coiling temperature (°C) | |
| A | 1 | 901 | 20 | 632 | Working example |
| | 2 | 888 | 25 | 613 | Working example |
| | 3 | 842 | 30 | 624 | Comparative example |
| | 4 | 902 | 5 | 618 | Comparative example |
| B | 5 | 902 | 20 | 645 | Working example |
| C | 6 | 897 | 35 | 537 | Comparative example |
| | 7 | 916 | 25 | 627 | Working example |
| D | 8 | 902 | 20 | 630 | Comparative example |
| E | 9 | 911 | 20 | 625 | Comparative example |
| F | 10 | 914 | 20 | 604 | Working example |
| G | 11 | 921 | 25 | 623 | Comparative example |

A test specimen was sampled from the hot-rolled steel sheet and was subjected to structure observation, a tensile test, and a hole expanding test to determine the area ratio of a ferrite phase, the average grain size and volume ratio of Ti-containing fine carbide, the atomic ratio of C to Ti in the fine carbide, tensile strength, and the hole expanding ratio (stretch flange formability). The test methods were described below.

(i) Structure observation

A test specimen was sampled from the hot-rolled steel sheet. A cross section of the test specimen parallel to the rolling direction was mechanically polished and etched with nital. A structure photograph (SEM photograph) taken with a scanning electron microscope (SEM) at a magnification ratio of 3000 was used to determine the ferrite phase, the type of structure other than the ferrite phase, and their area ratios using an image analyzing apparatus.
A thin film prepared from the hot-rolled steel sheet was observed with a transmission electron microscope (TEM) at a magnification ratio in the range of 120000 to 260000 to determine the grain size and volume ratio of Ti-containing fine carbide.
The atomic ratio of C to Ti in fine carbide was determined with an energy dispersive X-ray spectrometer (EDX) of TEM.
Each grain size of Ti-containing fine carbide was determined through image processing using circular approximation on the basis of observation of 30 visual fields at a magnification ratio of 260000. The arithmetic mean of the grain sizes was considered to be the average grain size. The area ratio of fine carbide to the entire structure was determined by image analysis from the observation from which the grain sizes were determined. The area ratio was considered to be the volume ratio.

(ii) Tensile test

A JIS No. 5 test piece for tensile test (JIS Z 2201) was sampled from the hot-rolled steel sheet such that the tensile direction was perpendicular to the rolling direction, and was subjected to a tensile test in accordance with JIS Z 2241 to measure tensile strength (TS).

(iii) Hole expanding test

A test specimen (size: 130 mm x 130 mm) was sampled from the hot-rolled steel sheet. A hole having an initial diameter $d_0$ of 10mm$\phi$ was punched in the test specimen. The test specimen was subjected to a hole expanding test. More specifically, the hole was expanded with a conical punch having a vertex angle of 60 degrees. When a crack passed through the hot-rolled steel sheet (test specimen), the diameter d of the hole was measured. The hole expanding ratio $\lambda$ (%) was calculated using the following equation.

$$\text{Hole expanding ratio } \lambda \ (\%) = \{(d - d_0)/d_0\} \times 100$$

Table 3 shows the results.

[Table 3]

| Steel No. | Hot-rolling No. | Structure of hot-rolled steel sheet | | | | | Mechanical characteristics of hot-rolled steel sheet | | Note |
|---|---|---|---|---|---|---|---|---|---|
| | | Type *1 | Area ratio of ferrite phase (%) *2 | Ti-containing fine carbide | | | Tensile strength TS (MPa) | Hole expanding ratio $\lambda$ (%) | |
| | | | | Average grain size (nm) | Volume ratio *3 | C/Ti *4 | | | |
| A | 1 | F + P | 98 | 4 | 0.0013 | 1.22 | 615 | 132 | Working example |
| | 2 | F | 100 | 5 | 0.0011 | 1.34 | 603 | 135 | Working example |
| | 3 | F + B | 99 | 11 | 0.0005 | 0.97 | 574 | 92 | Comparative example |
| | 4 | F + P | 98 | 15 | 0.0007 | 1.08 | 468 | 131 | Comparative example |
| B | 5 | F + P | 99 | 4 | 0.0013 | 1.19 | 614 | 137 | Working example |
| C | 6 | F + B | 92 | 12 | 0.0006 | 0.95 | 568 | 97 | Comparative example |
| | 7 | F | 100 | 5 | 0.0014 | 1.28 | 618 | 134 | Working example |
| D | 8 | F + B | 98 | 11 | 0.0002 | 0.42 | 475 | 113 | Comparative example |
| E | 9 | F + B | 98 | 12 | 0.0005 | 0.98 | 573 | 71 | Comparative example |
| F | 10 | F + P | 98 | 4 | 0.0012 | 1.01 | 621 | 128 | Working example |

(continued)

| Steel No. | Hot-rolling No. | Structure of hot-rolled steel sheet | | | | | Mechanical characteristics of hot-rolled steel sheet | | Note |
|---|---|---|---|---|---|---|---|---|---|
| | | Type *1 | Area ratio of ferrite phase (%) *2 | Ti-containing fine carbide | | | Tensile strength TS (MPa) | Hole expanding ratio λ (%) | |
| | | | | Average grain size (nm) | Volume ratio *3 | C/Ti *4 | | | |
| G | 11 | F + B | 98 | 3 | 0.0005 | 1.22 | 463 | 131 | Comparative example |

*1: F denotes ferrite. P denotes pearlite. B denotes bainite.
*2: Area ratio of ferrite phase to the entire structure (%)
*3: Volume ratio of Ti-containing fine carbide to the entire structure
*4: Atomic ratio of C to Ti in Ti-containing fine carbide

The working examples are hot-rolled steel sheets having high-strength, that is, tensile strength TS of 590 MPa or more, and excellent stretch flange formability, that is, a hole expanding ratio λ of 100% or more. The comparative examples outside the scope of the present invention do not have the predetermined high strength or hole expanding ratio λ.

(EXAMPLE 2)

Molten steel having a composition listed in Table 4 was continuously casted into a slab (steel) having a thickness of 250 mm by a known method. The slab was heated to 1250°C and was then subjected to rough rolling and finish rolling at a finish-rolling temperature listed in Table 5. After the finish rolling, the rolled sheet was cooled from 880°C to the coiling temperature at an average cooling rate listed in Table 5 and was coiled at a coiling temperature listed in Table 5, thus yielding a hot-rolled steel sheet having a thickness of 2.3 mm. Some hot-rolled steel sheets (steel No. H, hot-rolling No. 13, and steel No. I, hot-rolling No. 15) were immersed in a galvanizing bath (0.1% Al-Zn) at 480°C to form 45 g/m$^2$ of a galvanizing film, thus yielding galvanized steel sheets. After the formation of a galvanizing film in the same manner as described above, other hot-rolled steel sheets (steel No. J, hot-rolling No. 18, and steel No. K, No. 22) were subjected to alloying at 520°C, yielding galvannealed steel sheets.

[Table 4]

| Steel No. | Chemical Composition (mass %) | | | | | | | | | | Formula (1) | Formula (2) | Formula (4) | Satisfying Formula (4) * | Note |
|---|---|---|---|---|---|---|---|---|---|---|---|---|---|---|---|
| | C | Si | Mn | P | S | N | Al | Ti | B | Others | | | | | |
| H | 0.037 | 0.02 | 0.68 | 0.012 | 0.0031 | 0.0045 | 0.042 | 0.076 | - | - | 0.060 | 0.00068 | 0.00117 | ○ | Working example |
| I | 0.045 | 0.02 | 0.32 | 0.011 | 0.0029 | 0.0043 | 0.043 | 0.079 | 0.0017 | Cu: 0.02, Ni: 0.01, W: 0.01 | 0.059 | 0.00032 | 0.00125 | ○ | Working example |
| J | 0.039 | 0.01 | 0.29 | 0.011 | 0.0033 | 0.0042 | 0.045 | 0.074 | 0.0008 | - | 0.059 | 0.00029 | 0.00114 | ○ | Working example |
| K | 0.048 | 0.01 | 0.26 | 0.011 | 0.0036 | 0.0049 | 0.041 | 0.091 | 0.0004 | Ca: 0.01, Mg: 0.02 | 0.062 | 0.00026 | 0.00143 | ○ | Working example |
| L | 0.032 | 0.03 | 0.31 | 0.010 | 0.0028 | 0.0037 | 0.042 | 0.085 | 0.0012 | - | 0.057 | 0.00031 | 0.00142 | ○ | Working example |
| M | 0.026 | 0.02 | 0.54 | 0.011 | 0.0027 | 0.0036 | 0.040 | 0.084 | - | - | 0.056 | 0.00054 | 0.00141 | ○ | Working example |
| N | 0.031 | 0.02 | 0.29 | 0.012 | 0.0013 | 0.0038 | 0.051 | 0.089 | 0.0006 | Sn: 0.01, Pb: 0.01 | 0.055 | 0.00029 | 0.00154 | ○ | Working example |
| O | 0.031 | 0.01 | 0.31 | 0.012 | 0.0027 | 0.0031 | 0.052 | 0.097 | 0.0007 | - | 0.055 | 0.00031 | 0.00172 | ○ | Working example |
| P | 0.029 | 0.01 | 0.48 | 0.011 | 0.0031 | 0.0039 | 0.046 | 0.087 | - | - | 0.058 | 0.00048 | 0.00144 | ○ | Working example |
| Q | 0.024 | 0.01 | 0.28 | 0.010 | 0.0032 | 0.0038 | 0.043 | 0.083 | 0.0009 | Co: 0.01 | 0.058 | 0.00028 | 0.00136 | ○ | Working example |
| R | 0.023 | 0.02 | 0.33 | 0.012 | 0.0030 | 0.0037 | 0.042 | 0.078 | 0.0004 | Nb: 0.02, Ta: 0.01 | 0.057 | 0.00033 | 0.00127 | ○ | Working example |
| S | 0.026 | 0.02 | 0.53 | 0.011 | 0.0029 | 0.0042 | 0.048 | 0.089 | - | - | 0.059 | 0.00053 | 0.00146 | ○ | Working example |
| T | 0.031 | 0.01 | 0.62 | 0.011 | 0.0028 | 0.0037 | 0.039 | 0.082 | - | As: 0.01, Cr: 0.02 | 0.057 | 0.00062 | 0.00136 | ○ | Working example |
| U | 0.003 | 0.01 | 0.28 | 0.010 | 0.0027 | 0.0036 | 0.049 | 0.073 | - | - | 0.056 | 0.00028 | 0.00118 | × | Comparative example |

EP 2 586 886 B1

(continued)

| Steel No. | Chemical Composition (mass %) | | | | | | | | | | Formula (1) | Formula (2) | Formula (4) | Satisfying Formula (4) * | Note |
|---|---|---|---|---|---|---|---|---|---|---|---|---|---|---|---|
| | C | Si | Mn | P | S | N | Al | Ti | B | Others | | | | | |
| V | 0.029 | 0.01 | 0.51 | 0.010 | 0.0027 | 0.0035 | 0.048 | 0.041 | - | - | 0.056 | 0.00051 | 0.00052 | ○ | Comparative example |
| W | 0.004 | 0.02 | 0.48 | 0.012 | 0.0025 | 0.0034 | 0.005 | 0.042 | 0.0007 | Cu: 0.01 | 0.055 | 0.00048 | 0.00055 | × | Comparative example |
| X | 0.031 | 0.02 | 2.01 | 0.012 | 0.0029 | 0.0040 | 0.042 | 0.086 | - | - | 0.058 | 0.00201 | 0.00142 | ○ | Comparative example |
| Y | 0.078 | 0.02 | 0.37 | 0.011 | 0.0030 | 0.0041 | 0.045 | 0.097 | - | Mg: 0.01, Nb: 0.01 | 0.059 | 0.00037 | 0.00163 | ○ | Comparative example |
| Z | 0.067 | 0.02 | 0.30 | 0.011 | 0.0037 | 0.0039 | 0.048 | 0.095 | 0.0005 | - | 0.059 | 0.00030 | 0.00158 | ○ | Comparative example |
| ZA | 0.024 | 0.01 | 0.46 | 0.011 | 0.0031 | 0.0042 | 0.051 | 0.131 | 0.0007 | - | 0.059 | 0.00046 | 0.00233 | × | Comparative example |
| ZB | 0.058 | 0.01 | 0.47 | 0.013 | 0.0025 | 0.0031 | 0.045 | 0.110 | - | - | 0.054 | 0.00047 | 0.00199 | ○ | Comparative example |
| ZC | 0.027 | 0.02 | 0.34 | 0.010 | 0.0028 | 0.0041 | 0.046 | 0.069 | 0.0003 | - | 0.058 | 0.00034 | 0.00106 | ○ | Comparative example |

Formula (1): $0.04 + (N/14 \times 48 + S/32 \times 48)$
Formula (2): $0.001 \times Mn$ (mass %)
Formula (4): $Ti/48 - N/14 - S/32$
*: A circle indicates that the formula (4) ($C/12 > Ti/48 - N/14 - S/32$) was satisfied. A cross indicates that the formula (4) was not satisfied.

**EP 2 586 886 B1**

[Table 5]

| Steel No. | Hot-rolling No. | Manufacturing conditions for hot-rolled steel sheet | | | Note |
|---|---|---|---|---|---|
| | | Finish-rolling temperature (°C) | Average cooling temperature (°C/s) | Coiling temperature (°C) | |
| H | 12 | 915 | 25 | 685 | Working example |
| | 13 | 920 | 30 | 655 | Working example |
| | 14 | 835 | 30 | 645 | Comparative example |
| I | 15 | 916 | 25 | 690 | Working example |
| | 16 | 906 | 40 | 700 | Working example |
| | 17 | 912 | 5 | 695 | Comparative example |
| J | 18 | 926 | 20 | 645 | Working example |
| | 19 | 909 | 25 | 540 | Comparative example |
| | 20 | 911 | 30 | 810 | Comparative example |
| K | 21 | 912 | 25 | 625 | Working example |
| | 22 | 921 | 40 | 730 | Working example |
| | 23 | 907 | 5 | 535 | Comparative example |
| L | 24 | 922 | 25 | 730 | Working example |
| M | 25 | 908 | 30 | 745 | Working example |
| N | 26 | 928 | 30 | 685 | Working example |
| O | 27 | 899 | 30 | 630 | Working example |
| P | 28 | 914 | 25 | 610 | Working example |
| Q | 29 | 908 | 30 | 745 | Working example |
| R | 30 | 928 | 30 | 685 | Working example |
| S | 31 | 899 | 30 | 630 | Working example |
| T | 32 | 914 | 25 | 610 | Working example |

17

(continued)

| Steel No. | Hot-rolling No. | Manufacturing conditions for hot-rolled steel sheet | | | Note |
|---|---|---|---|---|---|
| | | Finish-rolling temperature (°C) | Average cooling temperature (°C/s) | Coiling temperature (°C) | |
| U | 33 | 906 | 20 | 625 | Comparative example |
| V | 34 | 912 | 25 | 725 | Comparative example |
| W | 35 | 925 | 30 | 710 | Comparative example |
| X | 36 | 931 | 30 | 650 | Comparative example |
| Y | 37 | 912 | 25 | 625 | Comparative example |
| Z | 38 | 913 | 20 | 640 | Comparative example |
| ZA | 39 | 916 | 25 | 630 | Comparative example |
| ZB | 40 | 907 | 30 | 650 | Comparative example |
| ZC | 41 | 909 | 30 | 611 | Comparative example |

A test specimen was sampled from the hot-rolled steel sheet and, in the same manner as in Example 1, was subjected to the structure observation, the tensile test, and the hole expanding test to determine the area ratio of a ferrite phase, the average grain size and volume ratio of Ti-containing fine carbide, the atomic ratio of C to Ti in the fine carbide, tensile strength, and the hole expanding ratio (stretch flange formability).

Table 6 shows the results.

[Table 6]

| Steel No. | Hot-rolling No. | Structure of hot-rolled steel sheet | | | | | Mechanical characteristics of hot-rolled steel sheet | | Note |
|---|---|---|---|---|---|---|---|---|---|
| | | Type *1 | Area ratio of ferrite phase (%) *2 | Ti-containing fine carbide | | | Tensile strength TS (MPa) | Hole expanding ratio $\lambda$ (%) | |
| | | | | Average grain size (nm) | Volume ratio *3 | C/Ti*4 | | | |
| H | 12 | F | 100 | 5 | 0.0029 | 1.53 | 608 | 123 | Working example |
| | 13 | F | 100 | 5 | 0.0028 | 1.34 | 611 | 115 | Working example |
| | 14 | F + B | 92 | 4 | 0.0021 | 1.12 | 608 | 88 | Comparative example |

(continued)

| Steel No. | Hot-rolling No. | Structure of hot-rolled steel sheet | | | | | Mechanical characteristics of hot-rolled steel sheet | | Note |
|---|---|---|---|---|---|---|---|---|---|
| | | Type *1 | Area ratio of ferrite phase (%) *2 | Ti-containing fine carbide | | | Tensile strength TS (MPa) | Hole expanding ratio λ (%) | |
| | | | | Average grain size (nm) | Volume ratio *3 | C/Ti*4 | | | |
| I | 15 | F + | 99 | 4 | 0.0022 | 1.65 | 614 | 125 | Working example |
| | 16 | F | 100 | 5 | 0.0020 | 1.45 | 615 | 135 | Working example |
| | 17 | F + B | 99 | 19 | 0.0018 | 1.22 | 479 | 143 | Comparative example |
| J | 18 | F | 100 | 4 | 0.0026 | 1.11 | 618 | 121 | Working example |
| | 19 | F + B | 93 | 4 | 0.0004 | 1.24 | 523 | 134 | Comparative example |
| | 20 | F + B | 98 | 14 | 0.0027 | 1.22 | 541 | 118 | Comparative example |
| K | 21 | F | 100 | 8 | 0.0025 | 1.65 | 597 | 128 | Working example |
| | 22 | F | 100 | 5 | 0.0023 | 1.55 | 618 | 123 | Working example |
| | 23 | F | 100 | 16 | 0.0024 | 1.43 | 512 | 131 | Comparative example |
| L | 24 | F | 100 | 4 | 0.0029 | 1.24 | 622 | 114 | Working example |
| M | 25 | F + P | 95 | 4 | 0.0024 | 1.11 | 601 | 128 | Working example |
| N | 26 | F+B | 97 | 3 | 0.0025 | 1.13 | 613 | 131 | Working example |
| O | 27 | F+B | 98 | 5 | 0.0026 | 1.19 | 621 | 124 | Working example |
| P | 28 | F | 100 | 4 | 0.0018 | 1.24 | 625 | 111 | Working example |
| Q | 29 | F | 100 | 5 | 0.0019 | 1.04 | 596 | 124 | Working example |
| R | 30 | F | 100 | 4 | 0.0017 | 1.52 | 605 | 131 | Working example |
| S | 31 | F | 100 | 5 | 0.0018 | 1.21 | 619 | 122 | Working example |
| T | 32 | F | 100 | 5 | 0.0020 | 1.33 | 613 | 126 | Working example |
| U | 33 | F | 100 | 11 | 0.0001 | 0.07 | 412 | 135 | Comparative example |

(continued)

| Steel No. | Hot-rolling No. | Structure of hot-rolled steel sheet | | | | | Mechanical characteristics of hot-rolled steel sheet | | Note |
| --- | --- | --- | --- | --- | --- | --- | --- | --- | --- |
| | | Type *1 | Area ratio of ferrite phase (%) *2 | Ti-containing fine carbide | | | Tensile strength TS (MPa) | Hole expanding ratio λ (%) | |
| | | | | Average grain size (nm) | Volume ratio *3 | C/Ti*4 | | | |
| V | 34 | F + P | 99 | 4 | 0.0006 | 2.68 | 430 | 132 | Comparative example |
| W | 35 | F + B | 99 | 5 | 0.0005 | 0.91 | 492 | 131 | Comparative example |
| X | 36 | F | 100 | 5 | 0.0027 | 1.23 | 624 | 84 | Comparative example |
| Y | 37 | F + P | 98 | 4 | 0.0051 | 1.89 | 734 | 76 | Comparative example |
| Z | 38 | F | 100 | 5 | 0.0048 | 1.76 | 712 | 75 | Comparative example |
| ZA | 39 | F | 100 | 17 | 0.0012 | 0.84 | 512 | 124 | Comparative example |
| ZB | 40 | F | 100 | 5 | 0.0056 | 1.65 | 753 | 76 | Comparative example |
| ZC | 41 | F + P | 97 | 12 | 0.0008 | 1.15 | 479 | 124 | Comparative example |

*1: F denotes ferrite. P denotes pearlite. B denotes bainite.
*2: Area ratio of ferrite phase to the entire structure (%)
*3: Volume ratio of Ti-containing fine carbide to the entire structure
*4: Atomic ratio of C to Ti in Ti-containing fine carbide

The working examples are hot-rolled steel sheets having high-strength, that is, tensile strength TS of 590 MPa or more, and excellent stretch flange formability, that is, a hole expanding ratio λ of 100% or more. The comparative examples outside the scope of the present invention do not have the predetermined high strength or hole expanding ratio λ.

**Claims**

1.  A high-strength hot-rolled steel sheet having excellent formability, comprising:

    a composition including
    C: 0.005% or more and 0.050% or less,
    Si: 0.2% or less,
    Mn: 0.8% or less,
    P: 0.025% or less,
    S: 0.01% or less,
    N: 0.01% or less,
    Al: 0.06% or less, and
    Ti: 0.05% or more and 0.10% or less,

    optionally B: 0.0003% or more and 0.0035% or less so as to satisfy the following formula (2), and
    optionally at least one of Cu, Sn, Ni, Ca, Mg, Co, As, Cr, W, Nb, Pb, and Ta, which in total constitutes 0.1% or less of the composition,

on a mass percent basis, such that S, N, and Ti satisfy the following formula (1) and the composition satisfies the following formula (4), the remainder being Fe and incidental impurities;
a matrix in which a ferrite phase constitutes 95% by area or more of the entire structure; and
a structure in which Ti-containing fine carbide having an average grain size of less than 10 nm is dispersedly precipitated, and the volume ratio of the fine carbide to the entire structure is 0.0007 or more,
wherein the high-strength hot-rolled steel sheet has a tensile strength of 590 MPa or more:

$$\mathrm{Ti} \geq 0.04 + (\mathrm{N}/14 \times 48 + \mathrm{S}/32 \times 48) \qquad (1)$$

$$\mathrm{B} \geq 0.001 \times \mathrm{Mn} \quad (2)$$

$$\mathrm{C}/12 > \mathrm{Ti}/48 - \mathrm{N}/14 - \mathrm{S}/32 \qquad (4)$$

wherein B, Mn, C, S, N, and Ti denote their respective contents (% by mass), and
wherein the atomic ratio of C to Ti in the fine carbide satisfies the following formula (3):

$$\mathrm{C}/\mathrm{Ti} > 1.0 \qquad (3)$$

wherein C/Ti denotes the atomic ratio of C to Ti in the fine carbide.

2. The high-strength hot-rolled steel sheet having excellent formability according to Claim 1, further comprising a plating film on the surface thereof.

3. A method for manufacturing a high-strength hot-rolled steel sheet having a tensile strength of 590 MPa or more and excellent formability, comprising:

hot rolling steel, the hot rolling involving rough rolling and finish rolling; and then cooling and coiling the steel to manufacture a hot-rolled steel sheet,
wherein the steel has a composition including
C: 0.005% or more and 0.050% or less,
Si: 0.2% or less,
Mn: 0.8% or less,
P: 0.025% or less,
S: 0.01% or less,
N: 0.01% or less,
Al: 0.06% or less, and
Ti: 0.05% or more and 0.10% or less,

optionally B: 0.0003% or more and 0.0035% or less so as to satisfy the following formula (2),
optionally at least one of Cu, Sn, Ni, Ca, Mg, Co, As, Cr, W, Nb, Pb, and Ta, which in total constitutes 0.1% or less of the composition,
on a mass percent basis, such that S, N, and Ti satisfy the following formula (1) and the composition satisfies the following formula (4), the remainder being Fe and incidental impurities,
the finish-rolling temperature is 880°C or more, the average cooling rate is 10°C/s or more, and the coiling temperature is 550°C or more and less than 800°C:

$$\mathrm{Ti} \geq 0.04 + (\mathrm{N}/14 \times 48 + \mathrm{S}/32 \times 48) \qquad (1)$$

$$\mathrm{B} \geq 0.001 \times \mathrm{Mn} \quad (2)$$

$$\mathrm{C}/12 > \mathrm{Ti}/48 - \mathrm{N}/14 - \mathrm{S}/32 \qquad (4)$$

wherein B, Mn, C, S, N, and Ti denote their respective contents (% by mass).

**Patentansprüche**

1. Hochfestes warmgewalztes Stahlblech mit exzellenter Umformbarkeit, umfassend:

eine Zusammensetzung, die
C: 0,005% oder mehr und 0,050% oder weniger,
Si: 0,2% oder weniger,
Mn: 0,8% oder weniger,
P: 0,025% oder weniger,
S: 0,01% oder weniger,
N: 0,01% oder weniger,
Al: 0,06% oder weniger und
Ti: 0,05% oder mehr und 0,10% oder weniger,

optional B: 0,0003% oder mehr und 0,0035% oder weniger, so dass die folgende Formel (2) erfüllt wird, und optional zumindest eines aus Cu, Sn, Ni, Ca, Mg, Co, As, Cr, W, Nb, Pb und Ta, was insgesamt 0,1% oder weniger der Zusammensetzung ausmacht,
auf einer Massenprozentbasis beinhaltet, so dass S, N und Ti die folgende Formel (1) erfüllen und die Zusammensetzung die folgende Formel (4) erfüllt, wobei der Rest aus Fe und zufälligen Verunreinigungen besteht;
eine Matrix, in der eine Ferritphase nach Fläche 95% oder mehr des gesamten Gefüges ausmacht; und
ein Gefüge, in dem Ti-enthaltende feine Karbide mit einem durchschnittlichen Korndurchmesser von weniger als 10 nm dispergiert ausgeschieden sind und das Volumenverhältnis der feinen Karbide zum gesamten Gefüge 0,0007 oder mehr beträgt,
wobei das hochfeste, warmgewalzte Stahlblech eine Zugfestigkeit von 590 MPa oder mehr aufweist:

$$\mathrm{Ti} \geq 0,04 + (N/14 \times 48 + S/32 \times 48) \qquad (1)$$

$$B \geq 0,001 \times Mn \quad (2)$$

$$C/12 > Ti/48 - N/14 - S/32 \qquad (4)$$

wobei B, Mn, C, S, N und Ti deren jeweilige Gehalte (% nach Masse) kennzeichnen, und
wobei das atomare Verhältnis von C zu Ti in den feinen Karbiden die folgende Formel (3) erfüllt:

$$C/Ti > 1,0 \qquad (3)$$

wobei C/Ti das atomare Verhältnis von C zu Ti in den feinen Karbiden kennzeichnet.

2. Hochfestes warmgewalztes Stahlblech mit exzellenter Umformbarkeit gemäß Anspruch 1, weiterhin umfassend eine Plattierungsschicht auf dessen Oberfläche.

3. Verfahren zur Herstellung eines hochfesten warmgewalzten Stahlblechs mit einer Zugfestigkeit von 590 MPa oder mehr und exzellenter Umformbarkeit, umfassend:

Warmwalzen von Stahl, wobei das Warmwalzen Vorwalzen und Endwalzen involviert; und anschließend Abkühlen und Aufwickeln des Stahls, um ein warmgewalztes Stahlblech herzustellen, wobei der Stahl eine Zusammensetzung aufweist, die
C: 0,005% oder mehr und 0,050% oder weniger,
Si: 0,2% oder weniger,
Mn: 0,8% oder weniger,
P: 0,025% oder weniger,

S: 0,01% oder weniger,
N: 0,01% oder weniger,
Al: 0,06% oder weniger und
Ti: 0,05% oder mehr und 0,10% oder weniger,

optional B: 0,0003% oder mehr und 0,0035% oder weniger, so dass die folgende Formel (2) erfüllt wird, und optional zumindest eines aus Cu, Sn, Ni, Ca, Mg, Co, As, Cr, W, Nb, Pb und Ta, was insgesamt 0,1% oder weniger der Zusammensetzung ausmacht,
auf einer Massenprozentbasis beinhaltet, so dass S, N und Ti die folgende Formel (1) erfüllen und die Zusammensetzung die folgende Formel (4) erfüllt, wobei der Rest aus Fe und zufälligen Verunreinigungen besteht, wobei die Endwalztemperatur 880°C oder mehr beträgt, die durchschnittliche Abkühlgeschwindigkeit 10°C/s oder mehr beträgt und die Haspeltemperatur 550°C oder mehr und weniger als 800°C beträgt:

$$\text{Ti} \geq 0{,}04 + (N/14 \times 48 + S/32 \times 48) \qquad (1)$$

$$B \geq 0{,}001 \times Mn \quad (2)$$

$$C/12 > Ti/48 - N/14 - S/32 \qquad (4)$$

wobei B, Mn, C, S, N und Ti deren jeweilige Gehalte (% nach Masse) kennzeichnen.

**Revendications**

1.  Tôle d'acier laminé à chaud à haute résistance ayant une excellente formabilité, comprenant :

    une composition incluant
    C : 0,005 % ou plus et 0,050 % ou moins,
    Si : 0,2 % ou moins,
    Mn : 0,8 % ou moins,
    P : 0,025 % ou moins,
    S : 0,01 % ou moins,
    N : 0,01 % ou moins,
    Al : 0,06 % ou moins, et
    Ti : 0,05 % ou plus et 0,10 % ou moins,

    facultativement B : 0,0003 % ou plus et 0,0035 % ou moins afin de satisfaire la formule (2) suivante, et facultativement au moins un parmi Cu, Sn, Ni, Ca, Mg, Co, As, Cr, W, Nb, Pb, et Ta, qui au total constitue 0,1 % ou moins de la composition,
    sur une base de pourcentage en masse, de telle sorte que S, N, et Ti satisfassent la formule (1) suivante et la composition satisfasse la formule (4) suivante, le reste étant Fe et des impuretés accidentelles ;
    une matrice dans laquelle une phase de ferrite constitue 95 % en surface ou plus de la structure entière ; et
    une structure dans laquelle un carbure fin contenant du Ti ayant une taille moyenne de grain inférieure à 10 nm est précipitée de façon dispersée, et le rapport volumique entre le carbure fin et la structure entière est de 0,0007 ou plus, dans laquelle la tôle d'acier laminé à chaud à haute résistance présente une résistance à la traction de 590 MPa ou plus :

$$Ti \geq 0{,}04 + (N/14 \times 48 + S/32 \times 48) \qquad (1)$$

$$B \geq 0{,}001 \times Mn \qquad (2)$$

$$C/12 > Ti/48 - N/14 - S/32 \qquad (4)$$

dans lesquelles B, Mn, C, S, N, et Ti indiquent leur teneur respective (% en masse), et

dans laquelle le rapport atomique entre C et Ti dans le carbure fin satisfait la formule (3) suivante :

$$C/Ti > 1,0 \qquad (3)$$

dans laquelle C/Ti indique le rapport atomique entre C et Ti dans le carbure fin.

2. Tôle d'acier laminé à chaud à haute résistance ayant une excellente formabilité selon la revendication 1, comprenant en outre un film de placage sur la surface de celle-ci.

3. Procédé pour fabriquer une tôle d'acier laminé à chaud à haute résistance présentant une résistance à la traction de 590 MPa ou plus et une excellente formabilité, comprenant :

le laminage à chaud d'un acier, le laminage à chaud impliquant un laminage préliminaire et un laminage de finition ; et ensuite le refroidissement et l'enroulement de l'acier pour fabriquer une tôle d'acier laminé à chaud, dans lequel l'acier présente une composition incluant
C : 0,005 % ou plus et 0,050 % ou moins,
Si : 0,2 % ou moins,
Mn : 0,8 % ou moins,
P : 0,025 % ou moins,
S : 0,01 % ou moins,
N : 0,01 % ou moins,
Al : 0,06 % ou moins, et
Ti : 0,05 % ou plus et 0,10 % ou moins,

facultativement B : 0,0003 % ou plus et 0,0035 % ou moins afin de satisfaire la formule (2) suivante,
facultativement au moins un parmi Cu, Sn, Ni, Ca, Mg, Co, As, Cr, W, Nb, Pb, et Ta, qui au total constitue 0,1 % ou moins de la composition,
sur une base de pourcentage en masse, de telle sorte que S, N, et Ti satisfassent la formule (1) suivante et la composition satisfasse la formule (4) suivante, le reste étant Fe et des impuretés accidentelles,
la température de laminage de finition est de 880 °C ou plus, la vitesse moyenne de refroidissement est de 10°C/s ou plus, et la température d'enroulement est de 550 °C ou plus et inférieure à 800 °C :

$$Ti \geq 0,04 + (N/14 \times 48 + S/32 \times 48) \qquad (1)$$

$$B \geq 0,001 \times Mn \qquad (2)$$

$$C/12 > Ti/48 - N/14 - S/32 \qquad (4)$$

dans lesquelles B, Mn, C, S, N, et Ti indiquent leur teneur respective (% en masse).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4329848 A
- JP 2000328186 A
- JP 2002161340 A
- EP 2267175 A